(19) Europäisches Patentamt
European Patent Office
Office européen des brevets

(11) Publication number: 0 242 027 B1

# (12) EUROPEAN PATENT SPECIFICATION

(45) Date of publication of patent specification: **21.09.94**

(51) Int. Cl.[5]: C08G 63/00, C08G 63/40, C08G 63/68

(21) Application number: **87301324.7**

(22) Date of filing: **16.02.87**

The file contains technical information submitted after the application was filed and not included in this specification

## (54) Block copolymers comprising rubber and polyester segments, method of preparation.

(30) Priority: **15.02.86 JP 31612/86**
**21.02.86 JP 37718/86**

(43) Date of publication of application:
**21.10.87 Bulletin 87/43**

(45) Publication of the grant of the patent:
**21.09.94 Bulletin 94/38**

(84) Designated Contracting States:
**DE FR GB IT SE**

(56) References cited:
**EP-A- 0 054 807**
**GB-A- 1 396 893**
**US-A- 4 338 225**
**US-A- 4 360 643**
**US-A- 4 603 171**

**PATENT ABSTRACTS OF JAPAN, vol. 5, no. 106 (C-62)[778], 10th July 1981;& JP-A-56 047 401**

(73) Proprietor: **Takemoto Yushi Kabushiki Kaisha**
**2-5, Minato-machi**
**Gamagouri-shi Aichi-ken (JP)**

(72) Inventor: **Kinoshita, Mitsuo**
**5-8 Nishikata Agehama**
**Mito-cho**
**Hoi-gun Aichi-ken (JP)**
Inventor: **Imamura, Shigeru**
**4-68-12 Mori**
**Toyokawa-shi Aichi-ken (JP)**
Inventor: **Matsueda, Hirokazu**
**4-3-8 Nishiodakano**
**Toyohashi-shi Aichi-ken (JP)**

(74) Representative: **Ablewhite, Alan James et al**
**MARKS & CLERK,**
**57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

**ANGEWANDTE MAKROMOLEKULARE CHEMIE, APPLIED MACROMOLECULAR CHEMISTRY ANDPHYSICS, vol. 134, no. 2159, August 1985, Hüthig &Wepf Verlag, Basel, CH ; B.M. MAHATO et al.: "New block copolymers"**

**CHEMICAL ABSTRACTS, vol. 82, 1975, page 60, no. 58873w, Columbus, Ohio, US;& JP-A-74 05 758**

**RESEARCH DISCLOSURE, no. 256, August 1985, page 403, no. 25624, Emsworth,Hampshire, GB; "Hydroxy-terminated Macromonomers and condensation polymersbased thereon"**

## Description

The present invention relates to [polydiene]/[polyester] block copolymers (hereinafter referred to as PD-PES block copolymers), to methods for their manufacture, and to their use as additives for synthetic resins and more particularly as additives for thermosetting or thermoplastic synthetic resins.

Polydiene compounds including diene homopolymers, such as polybutadiene, polyisoprene and polychloroprene, and copolymers partially consisting of vinyl compounds, are widely used as rubber-like elastic substances in their own right, and are also used as additives for many kinds of thermosetting and thermoplastic resins to improve impact strength, add flexibility, prevent moulding shrinkage and cracks and improve adhesive and water resisting properties. They may also be used as reforming agents for other polymers.

Thermoplastic polyesters obtained by polycondensation of aliphatic dibasic acids, aromatic dibasic acids and alicyclic dibasic acids with aliphatic dihydric alcohols provide examples of polyester-type polymers.

Thermosetting and thermoplastic synthetic resins have a wide range of uses as domestic building materials, such as for bath tubs and purification tanks, as industrial materials such as for machines and electrical products, as materials for vehicles such as automobiles and railroad wagons and as storage tanks and containers, and it is common practice to add to these resins other types of synthetic resins, fillers, fibre-reinforcing materials, etc to improve physical characteristics such as mechanical strength. It is particularly important to maximise impact strength when the product is used for construction purposes. Thus, rubber materials and other polymers, in addition to many other kinds of reinforcing materials, have been used as additives for synthetic resins, depending on the purpose for which the resin is intended.

Polyesters obtained from aromatic dicarboxylic acids and butylene glycol are employed for their superior properties as materials for synthetic fibres, moulded synthetic resin products, films, sheets and coating materials. Unsaturated polyesters containing $\alpha,\beta$- unsaturated dicarboxylic acids as the dibasic acid constituent also find wide industrial application.

Although polydiene compounds and polyester-type polymers are both widely used in broadly similar applications, there are significant differences between them in both their physical and other characteristics, and polymers having the characteristics of both would be of tremendous value.

The volume of thermosetting synthetic resins usually reduces by between 7-10% during setting, so the external appearance and the accuracy in measurements of the finished products is adversely affected. In attempts to counteract this effect, rubber materials and other thermoplastic synthetic resins have been blended with the precursor unsaturated polyesters. Among the rubber materials used for improving impact strength and reducing mould shrinkage are polybutadienes, butadiene-styrene copolymers, butadiene-acrylonitrile copolymers, butadiene-styrene- acrylonitrile copolymers and modified polybutadienes.

Synthetic resins principally used to produce reinforced plastics with improved impact strength are commonly known as matrix resins. Thermosetting unsaturated polyester resins and thermoplastic resins such as polyethylene terephthalate, polybutylene terephthalate, polycarbonate and polyamide are widely used as matrix resins, as they possess superior thermal stability, light resistance, moulding characteristics and mechanical properties. Such resins are reinforced by adding, for example, any of the following: a rubber-type substance, a reinforcing material, a pigment, a filler, and by using many different kinds of moulding process.

Matrix resins and rubber materials vary considerably in physical characteristics such as polarity and solubility, and it is extremely difficult to obtain a uniform mix or to disperse them stably. Moulded products obtained from an unstable mixture tend to have a blemished finish. The surface has indentations and protrusions and rubber materials may appear on the surface. Mechanical strength is reduced and shrinkage unaffected. Furthermore, one of the components may coagulate at the time of moulding, affecting the moulding characteristics and increasing fluctuations in the physical characteristics of the product.

Thus, there is a need to develop additives which can mix uniformly with, and stably disperse in, thermosetting or thermoplastic matrix resins, and should be able to both enhance moulding characteristics, so products with a good finish can be manufactured, increase the mechanical strength of the products and reduce shrinkage.

Many ideas have been tested to improve compatibility and/or dispersibility with thermosetting or thermoplastic synthetic resins. For example, to improve moulding, the rubber material has been graft-polymerised with another monomer such as styrene, maleic acid, methacrylates, acrylates, etc, (Japanese Patent Publications Tokkai 54-18862 and 54-40846). However, graft efficiency is not high and the compatibility and dispersibility are not satisfactorily high. To improve compatibility with thermosetting synthetic resins, styrene-type block copolymers have been considered (Japanese Patent Publications Tokkai 53-74592 and 60-99158). Compatibility is improved to a certain extent by the methods in these publications, but suffer, from the point of view of shrinkage and impact strength, as the styrene-type polymers used basically lack strength. Rubber modification of unsaturated polyester resins has also been tried using, for example, the Diels-Alder addition reaction to conjugate diene products such as dicyclo-pentadiene to the double bond of an unsaturated polyester having an $\alpha,\beta$-unsaturated dicarboxylic acid moiety (Japanese Patent Publication Tokkai 58-2315). Again improved compatibility is observed with unsaturated polyester resins as the amount of conjugate diene-type products added is small, but the method is not effective in reducing shrinkage or increasing impact strength.

It is therefore an object of the present invention to provide both rubber/polyester compounds, possessing properties of both components, and copolymers as additives for synthetic resins which can overcome the above problems and satisfy the stated requirements.

It has now been discovered that PD-PES block copolymers comprising a polydiene and a polyester satisfy both objects.

The new copolymers have the characteristics of either polydiene compounds or polyester-type polymers or both, and comprise conjugates of the two types of molecule. Previous attempts at producing such copolymers involved polycondensation of polydiene compounds with dibasic acid and aliphatic dihydric alcohol (see for example, US Patent No. 3 705 208 and Japanese Patent No. 7405958), or combining polydiene-type compounds with polyester-type polymers, either directly or by using a bridge-forming agent (e.g. see Japanese Patent Application No. 54-30285 or British Patent No. 1,396,893). By-products of unknown structure are generated by such methods and so are unsatisfactory for industrial use.

Polydiene is preferably a homopolymer such as polybutadiene, hydrogenated polybutadiene polyisoprene, or hydrogenated polyisoprene. The individual diene monomers are preferably in the cis conformation.

In the present invention there is provided a block copolymer of formula (I):

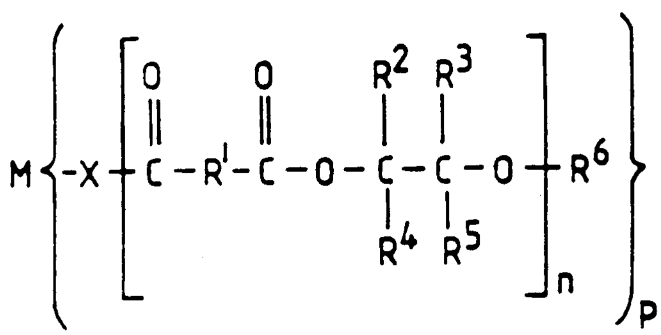

(I)

wherein M is a polydiene block or hydrogenated polydiene block;

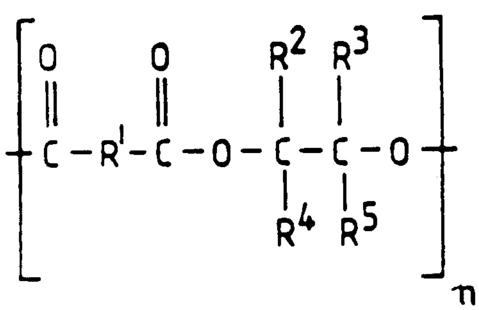

is a polyester block which is derived from the reaction between a dicarboxylic anhydride and epoxide, wherein $R^1$-$R^5$ are as defined below;

X is the group

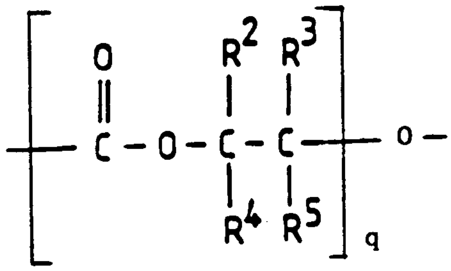

wherein q is zero when the polydiene or hydrogenated polydiene from which M is derived had within its molecule a hydroxyl group, and q is 1 when the polydiene or hydrogenated polydiene from which M is derived had a carboxyl group, and $R^2$-$R^5$ are as defined below;

$R^1$ is ethylene, ethenylene, 1,2-phenylene, 1,2-cyclohexylene, or cyclohexenylene and is the same or different in each repeat unit;

$R^2$-$R^5$ are the same or different and are hydrogen or $C_{1-2}$ alkyl and are the same or different in each repeat unit;

n and p are positive integers;

$R^6$ is hydrogen or

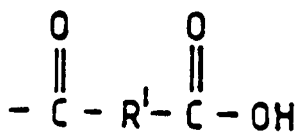

wherein $R^1$ is as defined;

and functional derivatives thereof, the weight ratio of the polydiene block to the total block copolymer being in the range of 95-5 weight %.

In an alternative aspect of the present invention, there are provided additives for synthetic resins comprising [polydiene]/[polyester] block copolymers having a polydiene portion and a polyester portion blocked together such that in each copolymer one or more polyester molecules are linked through ester bonds to each polydiene molecule.

The PD-PES block copolymers of this invention can be produced stably in an industrially advantageous manner by starting with a polydiene compound having within its molecule a grouping with a reactive hydrogen, such as a hydroxyl group or a carboxyl group, and polycondensing organic dicarboxylic anhydride and 1,2-epoxide with it in the presence of a catalyst to introduce a polyester chain at the reactive group of the polydiene. The polyester chain is formed, as a hydroxyl group is regenerated with each ring opening addition of a 1,2-epoxide to the carboxyl formed every time on organic dicarboxylic anhydride reacts with a hydroxyl group. A further anhydride then adds to the new hydroxyl and the process repeated. Thus, the polyester chain is formed by an esterification reaction between an hydroxyl group and an organic dicarboxylic anhydride taking place alternatively and sequentially.

When the active group is carboxyl then, if n moles of organic dicarboxylic anhydride are used for each carboxyl group, the amount of epoxide used is between n and n + 1 moles (where n is greater than 1). In the case where the active hydrogen group is hydroxyl, then the amount of anhydride used if n moles of epoxide are used for each active hydrogen group is between n and n + 1 moles.

It will be appreciated that, in the instance where the reactive hydrogen group is carboxyl, the first step in polymer formation is the addition of epoxide, not anhydride.

The present invention thus further provides a method for the production of polydiene polyester block copolymers comprising reaction of a polydiene-type compound having one or more active hydrogen atoms with at least one organic dicarboxylic anhydride and one or more species of 1,2-epoxide in the present of a catalyst.

The polydiene compounds which may be used in the aforementioned process include diene homopolymers having a suitable active hydrogen group such as a hydroxyl, or carboxyl group as mentioned above. The active hydrogen group or groups may be either along the length of a polydiene chain or at its

ends. The positions in the polydiene chain at which such active hydrogen groups are introduced are not essential and do not limit the present invention; nor is the present invention limited with respect to stereoisomers and structural isomers of the polymers or by the polymerization method such as radical polymerization, anion polymerization and anion "living" polymerization. Monomer diene compounds preferred for use as described above include butadiene, isoprene, chloroprene, 1,3-pentadiene and cyclopentadiene.

Particular examples of polydiene compounds which may be used advantageously in the aforementioned reaction include $\alpha,\omega$-poly-1,2-butadiene glycol (Nisso PB-G series), $\alpha,\omega$-poly-1,2-butadiene carboxylic acid (Nisso PB-C series), $\alpha,\omega$- poly-1,2-butadiene glycol mono-malate (Nisso PB-GM series, the above three produced by Nippon Soda, Inc.), end carboxyl modified poly-1,4-butadiene (Hycar CTB series produced by Ube Kosan, Inc, or B.F. Goodrich, Inc.) and end hydroxyl modified poly-1,4-butadiene (Poly-bd R-45M or R-45HT produced by Idemitsu Sekiyu Kagaku, Inc, or Arco Chemical, Inc). Any of the aforementioned polydiene compounds hydrogenated either partially or completely to the carbon-carbon double bond in its principal or side chain provides a suitable polydiene compound having active hydrogen group. Examples include hydrogenated $\alpha,\omega$poly- 1,2-butadiene glycol (Nisso PB-GI series produced by Nippon Soda, Inc.) and hydrogenated $\alpha,\omega$-poly- 1,2-butadiene dicarboxylic acid (Nisso PB-CI series produced by Nippon Soda, Inc).

Examples of organic dicarboxylic anhydride for use in the aforementioned reaction include aliphatic dicarboxylic anhydrides such as succinic anhydride, maleic anhydride, aromatic dicarboxylic anhydrides such as phthalic anhydride and alicyclic dicarboxylic anhydride such as cyclohexane dicarboxylic anhydride, cyclohexene dicarboxylic anhydride.

Suitable examples of 1,2-epoxide include aliphatic expoxides such as ethylene oxide, propylene oxide, 1,2-butylene oxide. Examples of catalyst to be used in the aforementioned reaction include lithium halides such as lithium chloride and lithium bromide and tetra $C_{1-4}$ alkyl quaternary ammonium salts such as tetramethyl ammonium bromide, tributylmethyl ammonium bromide, and tetrapropyl ammonium chloride.

In a preferred embodiment, a PD-PES block copolymer of the present invention is prepared as follows. In either the presence or absence of inactive solvent, predetermined amounts of anhydride and catalyst per mole of polydiene compound are placed inside a reaction vessel and a predetermined amount of epoxide is introduced under atmospheric or elevated pressure. The mixture is caused to react at 50-200 °C, preferably between 120-150 °C, to obtain a PD-PES block polymer.

The end groups of the polyester chains in the block copolymers of the present invention are usually hydroxyl groups or carboxyl groups, or a mixture thereof. The exact ratio depends on the molar ratio between anhydride and epoxide used. Thus, the ratio between hydroxyl and carboxyl end groups can be selected by varying the ratio between the reactants.

The aforementioned hydroxyl and/or carboxyl end groups may be further modified by reacton with various compounds having reactive groups such as vinyl, epoxy, isocyanate and carboxylic acid groups. These add through bonds such as ether and ester linkages, contributing to end modifications. Specific end-carboxyl groups may be generated by the reaction of dicarboxylic acids, polybasic acids (bivalent or greater) or their anhydrides, with an end hydroxyl group. The end groups may be modified by the formation of, for example, ether or ester bonds. Salts of alkali, or alkaline earth, metals may be used to inactivate end-carboxyls.

Magnesium oxide and isocyanate end-group modifications may be used for increasing viscosity for sheet moulding components (SMC) and bulk moulding compounds (BMC). For added stability when using unsaturated polyester resin premixes as moulding materials, and to improve physical characteristics of the moulded products, the ratio of carboxyl end groups is preferably greater when magnesium oxide is used, and the ratio of hydroxyl end groups is preferably greater when di-isocyanates are used.

PD-PES block copolymers with reactive end modifications as described above are useful as additives to improve the physical characteristics of the moulded products, as chemical bonds may be formed between the reactive groups and the matrix resins or various fillers and crosslinking agents. Those with inactive end modifications are useful in improving compatibility with matrix resins or for chemical stability.

The PD-PES block copolymers of the present invention have particularly superior characteristics as additives for improving impact strength and/or reducing shrinkage of moulded products using thermosetting resins and various thermoplastic resins as matrix resin. This is due to their more uniform and stable compatibility and dispersibility with matrix resins compared with the rubber-like substances and thermoplastic resins which have been used conventionally for similar purposes. PD-PES block copolymers with the desired characteristics can be obtained by varying the molecular weights, structures and compositions of their polydiene and polyester parts as well as the ratio between their molecular weights. Compatibility and dispersibility with matrix resins can be improved generally by increasing the molecular weight of the

polyester block relative to the polydiene block. More particularly, desired characteristics can be achieved by appropriate variation of the types of anhydride and epoxide monomer constituting the polyester portion, as well as the ratio therebetween, depending on the type of matrix resin. Increasing the ratio of polyester does not necessarily improve the surface characteristics of the moulded products, but it does improve compatibility with matrix resins. To improve both compatibility/dispersibility and the surface characteristics of the moulded products, therefore, the ratio between polydiene and the polyester is critical. The ratio in each case will be determined by the structure of each polymer and the matrix resin used.

The ratio of rubber to polyester determines the amphipathic property of the block copolymer with respect to rubber-type and polyester-type substances. If the ratio of polyester to polydiene is relatively low, the polyester-type qualities tend to be swamped. This can be altered/reversed by increasing the ratio. The amphipathic property of block copolymers according to the present invention is exhibited when the ratio of the polydiene block to the total block copolymer is in the range of 95-5 weight %. In any event, the length of the polyester chain in the block copolymer can be accurately determined.

Another important factor controlling the physical properties of the block copolymers according to the present invention is the structure and composition of the polymers from which they are formed. Physical characteristics of a block copolymer are greatly influenced by the properties of its individual components, while the physical characteristics of the individual components are dependent on their constituent monomers. Thus, the physical characteristics of the copolymer and its polydiene and polyester components, such as melting points, softening points and glass transition points can be modified by appropriate selection of monomers.

When the PD-PES block copolymers of the present invention are used as an additive for the purpose of improving impact strength and reducing shrinkage at the time of moulding, therefore, it is advantageous that the ratio between the polydiene block is between 10 and 95 weight %. It is particularly advantageous that this ratio be between 40 and 90 weight % for use with thermosetting synthetic resins. If the ratio of polyester block is less than 5 weight %, dispersibility with matrix resins is poor.

It will be appreciated that, while PD-PES block copolymers have been described as additives for matrix resins, they can also be used to advantage for stably dispersing other types of thermoplastic resin not compatible with matrix resins.

When used as additives, the PD-PES block copolymers of the present invention may also be mixed with appropriate amounts of elastomers or prepolymers (thermosetting synthetic resin materials), thermoplastic resins, monomers with vinyl polymerization characteristics, organic solvents, plasticisers, organic or inorganic bulk-increasing materials and fibre reinforcing materials. When PD-PES block copolymers are usd with thermosetting unsaturated polyester resins, in particular, it is advantageous to dilute them appropriately with a monomer with vinyl polymerization characteristics such as styrene, and methyl styrene, methyl methacrylate.

The following Examples serve to illustrate the present invention but are not intended to limit it in any way.

Section A

Test Example No. 1

In an autoclave were placed 222g (1.5 moles) of phthalic anhydride, 350g (3.5 moles) of succinic anhydride, 16340g (11.4 moles) of $\alpha$, $\omega$-poly-1,2-butadiene glycol (Nisson PB-G1000 produced by Nippon Soda, Inc. with average molecular weight of 1430) and 10g of lithium chloride. After nitrogen gas was substituted inside the reaction system, the mixture was stirred and heated to 130 °C. Next, 290g (5 moles) of propylene oxide was compressed in over a period of 60 minutes at a temperature of 130-140 °C. The reaction was complete after 2 hours under these conditions and 17185g of yellowish transparent viscous product was obtained.

The polybutadiene-polyester block copolymer thus obtained (Product A) had molecular weight of 1505, ratio of polydiene component 95.0%, acid value of 31 and hydroxyl value of 46. As used herein, molecular weight is the calculated value and weight % is denoted as "%".

Test Example No. 2

The same materials and method were used as in Test Example No.1 but in the ratios shown in Table 1 to produce different polybutadiene-polyester block copolymers (Products B, C, D and E). Lithium bromide (0.7g) was used as catalyst.

TABLE 1

| Polybutadiene-Polyester Block Copolymer | | B | C | D | E |
|---|---|---|---|---|---|
| α,ω-Poly-1,2-butadiene Glycol | (g) | 715.0 | 715.0 | 715.0 | 715.0 |
| | (Mols) | 0.5 | 0.5 | 0.5 | 0.5 |
| Phthalic Anhydride | (g) | 52.3 | 88.8 | 176.6 | 355.2 |
| | (Mols) | 0.35 | 0.6 | 1.2 | 2.4 |
| Succinic Anhydride | (g) | 82.5 | 140.0 | 280.0 | 560.0 |
| | (Mols) | 0.825 | 1.4 | 2.8 | 5.6 |
| Propylene Oxide | (g) | 4.27 | 92.8 | 208.8 | 440.8 |
| | (Mols) | 0.74 | 1.6 | 3.6 | 7.6 |
| Molecular Weight | | 1786.0 | 2073.0 | 2763.0 | 4142.0 |
| Ratio of Polybutadiene | (%) | 80.0 | 69.0 | 51.8 | 34.5 |
| Acid Value | | 27.0 | 23.0 | 17.0 | 12.0 |
| Hydroxyl Group Value | | 38.0 | 32.0 | 25.0 | 16.0 |

Test Example No.3

In an autoclave were placed 130.2g (1.3 moles) of succinic anhydride, 105.2g (0.71 moles) of phthalic anhydride, 35.8g (0.365 moles) of maleic anhydride, 1430g (1 mole) of α,ω-poly-1,2-butadiene glycol and 0.6g of lithium chloride. After nitrogen gas was substituted inside the reaction system, the mixture was stirred and heated to 130 °C. Next, 86.3g (1.49 moles) of propylene oxide was compressed in over a period of 40 minutes at a temperature of 125-130 °C. The reaction was complete after 2 hours under these conditions and a polybutadiene-polyester block copolymer was obtained. After the product was cooled, 447g of styrene monomer was added to form an 80% solution.

The polybutadiene-polyester block copolymer thus obtained had molecular weight of 1787 and ratio of polydiene component 80%. The acid value of this styrene solution was 25.6 and the hydroxyl value was 26.3.

Test Example 4

In a flask were placed 800g (0.448 moles) of Product B and 54.2g (0.54 moles) of succinic anhydride. These were maintained at 120-125 °C for 2 hours under a stream of nitrogen. After cooling to 50 °C, 200g of styrene monomer was added to form a solution.

A polybutadiene-polyester block copolymer with carboxyl-modified ends of polyester chains was obtained. The acid value of the styrene solution was 50.7 and the hydroxyl value was 1.9.

Test Example 5

In an autoclave were placed 175g (1.75 moles) of succinic anhydride, 111g (0.75 moles) of phthalic anhydride, 1520g (1 mole) of α,ω-poly-1,2-butadiene dicarboxylic acid (Nisso PB-C1000 produced by Nippon Soda, Inc. with average molecular weight of 1520) and 0.75g of lithium chloride. After nitrogen gas was substituted inside the reaction system, the mixture was stirred and heated to 135 °C. Next, 210g (3.65 moles) of propylene oxide was compressed in over a period of 1 hour at a temperature of 135-145 °C. The reaction was complete after 2 hours under these conditions, yielding 2016g of a yellowish transparent viscous product.

The polybutadiene-polyester block copolymer thus obtained had molecular weight of 2017, a ratio of polydiene component of 75.0%, an acid value of 36.1 and a hydroxyl value of 39.1.

Test Example No. 6

In an autoclave were placed 135g (0.875 moles) of cyclohexane dicarboxylic anhydride (Rikacid produced by Shin Nippon Rika, Inc.), 56g (0.375 moles) of phthalic anhydride, 2400g (0.5 moles) of end carboxyl modified poly-1,4-butadiene (Hycar CTB produced by Ube Kosan, Inc. with average molecular weight of 48000) and 1.1g of lithium chloride. After nitrogen gas was substituted inside the reaction system, the mixture was stirred and heated to 135 °C. Next, 106g (1.82 moles) of propylene oxide was compressed in over a period of 1.5 hours at a temperature of 135-145 °C. The reaction was complete after 3 hours under these conditions and a polybutadiene-polyester block copolymer was obtained. After cooling, 1797g of styrene monomer was added to prepare 4493g of styrene solution containing the block copolymer.

The block copolymer thus obtained had a molecular weight of 5392 and a ratio of polydiene component of 89%. The acid value of this styrene solution was 19.5 and its hydroxyl value was 45.6.

Test Example No.7

In an autoclave were placed 123g (0.8 moles) of cyclohexane dicarboxylic anhydride, 30g (0.20 moles) of cyclohexene dicarboxylic anhydride (Rikacid TH produced by Shin Nippon Rika, Inc.), 37g (0.25 moles) of maleic anhydride acid, 1750g (0.5 moles) of end carboxyl modified poly-1,4-butadiene acrylonitrile block copolymer (Hycar CTBN produced by Ube Kosan, Inc. with average molecular weight of 3500 and containing 8 Mole % of acrylonitrile) and 1.2g of tetra-methyl ammonium bromide. Thereafter 80g (1.82 moles) of propylene oxide was compressed as described in Test Example No. 6 and 2018g of a yellowish transparent viscous product was obtained.

The block copolymer thus obtained had molecular weight of 4040, ratio of polydiene segment 86.6%, acid value of 35.3 and hydroxyl value of 64.2.

Comparison Test No.1

In a flask were placed 80g (1.05 moles) of propylene glycol and 350g (0.245 moles) of $\alpha,\omega$-poly-1,2-butadieneglycol and the mixture heated to 80 °C with stirring and nitrogen gas was introduced into the reaction system. Thereafter, 91g (0.61 moles) of phthalic anhydride and 60g (0.61 moles) of maleic anhydride were added and the mixture further heated to gradually increase the temperature of the reacting system. An atmosphere of nitrogen was maintained. When the temperature of the reaction system reached 170 °C, water began to be generated by dehydration and condensation. Heating was continued to complete esterification but the temperature of the reaction system increased suddenly. The contents gelled and could no longer be stirred. The desired product was not obtained.

Comparison Test No.2

Comparison Test No.1 was repeated with succinic anhydride instead of maleic anhydride. The result was the same as in Comparison Test No. 1 and the desired product was not obtained.

Comparison Test No.3

In a flask were placed 98g (1.0 mole) of maleic anhydride, 148g (1.0 mole) of phthalic anhydride and 159.6g (2.15 moles) of propylene glycol. The mixture was heated to 210-220 °C and nitrogen gas introduced. The reaction was stopped when the acid value of the esterification condensate reached 25 and 365g of unsaturated polyester was obtained. Subsequently, 715g (0.5 moles) of $\alpha,\omega$-poly-1,2-butadiene glycol, 500m$\omega$ of xylene and 5 g of paratoluene sulfonic acid as catalyst were added for an esterification reaction with a xylene reflux until the effluence of water generated by the reaction stopped. After paratoluene sulfonic acid was neutralized with a water solution of sodium carbonate, xylene was distilled out under a reduced pressure to obtain the product.

The product thus obtained was separated into two layers, the upper layer containing about 350g of a mixture of which the principal constituent was unreacted $\alpha,\omega$-poly-1,2-butadiene glycol. The lower layer was used for evaluation and was a polybutadiene modified polyester.

Evaluation No.1

In a beaker were placed 60 parts by weight of styrene solution of unsaturated polyester resin containing 60% of solid components (Polyset 9107 produced by Hitachi Kasei, Inc.: Ester phthalate type), 27 weight parts of styrene monomer and 13 weight parts of additives shown in Table 2 and the contents stirred uniformly for 5 minutes by a propeller stirrer. The mixture was transferred to a 100-mℓ measuring cylinder, and left at room temperature with separation and changes with time being observed. The results are shown in Table 2.

TABLE 2

| Additive | Condition Immediately After Remaining Stationary | After 20 Min. | After 1 Hr. | After 24 hrs. |
|---|---|---|---|---|
| A | White, turbid dispersion | a | b | c |
| B | White, turbid-minute dispersion | a | a | b |
| C | Minute dispersion | a | a | a |
| D | Becomes soluble | a | a | a |
| E | Uniform dissolution | a | a | a |
| PBG | Separation into two layers | c | c | c |
| SBS | White, turbid-partial separation | c | c | c |
| PES | White, turbid dispersion | b | c | c |
| SES | White, turbid dispersion | a-b | c | c |

Note: A, B, C, D and E: As explained above

PBG: α,ω-poly-1,2-butadiene glycol

SBS: Styrene-butadiene-styrene block copolymer (Cariflex TR1102 produced by Shell Chemicals, Inc.)

PES: Product obtained in Comparison Test No. 3.

SES: Block copolymer of styrene-type polymer obtained by suspension polymerization of styrene monomer and end modified polyester (Tokkai 60-9915)

a = Stable dispersion, no separation observed

b = Slight separation

c = Separation clearly observed.

Evaluation No. 2

In a beaker were placed 90 parts by weight of liquid polybutadiene (Nisso PB B1000) and 10 parts of the additives shown in Table 3.

The mixtures were observed as described in Evaluation No.1. Results are shown in Table 3.

TABLE 3

| Additive | Condition Immediately After Remaining Stationary | After 20 Min. | After 1 Hr. | After 24 hrs. |
|---|---|---|---|---|
| A | Uniform dissolution | a | a | a |
| B | Becomes Soluble | a | a | a |
| C | Minute Dispersion | a | a | a |
| D | Minute-white, turbid dispersion | a | b | b |
| E | White, turbid dispersion | a | b | c |
| UP | Separation into two layers | c | c | c |
| Modified UP | White, turbid dispersion-partial separation | c | c | c |
| PES | White, turbid dispersion | b | c | c |
| SES | Separation into two layers | c | c | c |

Note: A - E, PES, SES, Evaluation: as Evaluation No.1

UP: Styrene solution of unsaturated polyester resin containing 60% solid component (as used in Evaluation No. 1).

Modified UP: Cyclopentadiene graft modified unsaturated polyester (Tokkai 58-2315).

Evaluation No.3

Forty parts by weight, of 33% styrene solution of the additives in Table 4, 60 parts of unsaturated polyester resin (Polyset 9120 produced by Hitachi Kasei, Inc.), 3 parts of zinc stearate, 1.5 part of tertiary butyl perbenzoate, 140 parts of calcium carbonate powder and 0.3 parts of para-benzoquinone were all mixed. Subsequently, 2 parts of magnesium oxide were added to immediately yield a product containing 10% of glass fibre with a fibre length of 1 inch. This was poured into a mould and heated to a mould temperature of 140 °C for forming. The SMC obtained was evaluated for lustre and rate of shrinkage. Results of the evaluation are shown in Table 4.

TABLE 4

| Additive | Lustre | Ratio of moulding shrinkage (%) |
| --- | --- | --- |
| A | b | -0.10 |
| B | a-b | -0.07 |
| C | a | -0.02 |
| D | a | 0.06 |
| E | a | 0.12 |
| PBG | c | -0.20 |
| PBA | c | -0.18 |
| SES | b | 0.25 |

**Note:** A-E, PBG, SES: as Evaluation No. 1.

PBA: α,ω-poly-1,2-butadiene dicarboxylic acid (Nisso PB-C1000)

a = Lustre good

b = Lustre not very good

c = No Lustre

Evaluation No. 4

Polybutylene terephthalate resin (0.5% orthochlorophenol solution with relative viscosity 1.70 at 25°C) and the additives shown in Table 5 were mixed in a ratio of 90/10 (by weight) and pellets were formed

using an extruder with a vent diameter of 40 mm for fusing and kneading. After the pellets were vacuum-dried, products were obtained by injection moulding. The Izod impact strength (with notches) of this product was measured (ASTM-D256-56). Results are shown in Table 5.

TABLE 5

| Additive | Izod Impact Strength (kg·cm/cm) |
|---|---|
| A | 7.9 |
| B | 8.4 |
| C | 8.2 |
| D | 7.5 |
| E | 6.8 |
| PBA | 2.5-3.2 |
| SES | 2.8 |
| None | 3.0 |

Note: A-E, PBA, SES: As Evaluation No. 1.

As will be seen from the above Test Examples and Evaluations, the present invention provides an industrially practicable method of producing block copolymers of consistent quality, having the characteristics of both liquid rubber-type compounds and polyester-type polymers and having affinity to either or both.

Section B

Production Example (No.1 B′ in Table 1a below)

Inside an autoclave were placed 52.3g (0.35 moles) of phthalic anhydride, 82.5g (0.825 moles) of succinic anhydride, 0.7g of lithium chloride as catalyst and 715g (0.5 moles) of α,ω-poly-1,2-butadiene glycol (Nisso PB-G1000 with average molecular weight of 1430 produced by Nippon Soda, Inc.) and after nitrogen gas was introduced into the reacting system, the mixture was heated to 130°C with stirring. Next, 42.7g (0.74 moles) of propylene oxide was compressed in over a period of one hour. The reaction was complete after 2 hours at 130°C and 890g of yellowish transparent viscous product was obtained. The molecular weight of the polybutadiene-polyester block copolymer thus obtained was 1786, the ratio of its polydiene segment was 80.0 %, its acid value was 27 and its hydroxyl value was 38.

A yellowish transparent styrene solution containing 80% of block copolymer was obtained by adding 200g of styrene monomer of 0.1 g of hydroquinone to 800g of the block copolymer.

Production Example No.2 (J in Table 2a below)

Inside a flask were placed 800g (0.448 moles) of the block copolymer of Production Example No.1 described above and 54.2g (0.54 moles) of succinic anhydride for a reaction at 120-125°C for two hours in a nitrogen reflux. After the content was cooled to 50°C, it was dissolved by adding 200g of styrene

monomer. The acid value of the styrene solution containing block copolymer wsas 50.7 and its hydroxyl value was 1.9. Polybutadiene-polyester block copolymer with carboxy-modified ends of polyester chains was obtained.

Test No. 1 (PD-PES block copolymers)

PD-PES block copolymers shown in Table 1a were obtained as described in Production Example No.1.

TABLE 1a

| Kind | Polyvidene Compound Molecular Wt | Polyester Chain Forming Component | | Molecular Wt of PD-PES Block Copolymer | Ratio of Polydiene Block (%) | End Group Molar Ratio |
|---|---|---|---|---|---|---|
| | | *1 Molar Ratio | *2 | | | |
| A | *3 1430 | SA/PA 7/3 | PO | 1505 | 95.0 | COOH/OH 40.3/59.7 |
| B | Same as above | Same as above | Same as above | 1786 | 80.0 | Same as above 41.5/58.5 |
| C | Same as above | Same as above | Same as above | 2073 | 69.0 | Same as above 41.8/58.2 |
| D | Same as above | Same as above | Same as above | 2763 | 51.8 | Same as above 40.4/59.6 |
| E | Same as above | Same as above | Same as above | 4142 | 34.5 | Same as above 42.9/57.1 |
| F | Same as above | SP/PA/MA 5.5/3.0/1.5 | Same as above | 1786 | 80.0 | Same as above 49.3/50.7 |
| G | *4 1520 | SA/PA 7/3 | PO | 2017 | 75.0 | COOH/OH 48.0/52.0 |
| H | *5 4800 | HA/PA 7/3 | Same as above | 5392 | 89.0 | Same as above 30.0/70.0 |
| I | *6 3500 | HA/TA/MA 6.4/1.6/2.0 | EO | 4040 | 86.6 | Same as above 35.5/64.5 |

**Notes:**

*1 Organic dicarboxylic anhydride

*2 Epoxide

*3 α-ω-poly-1,2-butadiene glycol (Nisso PB-G1000 produced by Nippon Soda, Inc.).

*4 α,ω-poly-1,2-butadiene dicarboxylic acid (Nisso PB-C1000 produced by Nippon Soda, Inc.).

*5 End carboxyl modified poly-1,4-butadiene (Hycar CTB produced by Ube Kosan, Inc.).

*6 End carboxyl modified poly-1,4-butadiene acrylonitrile block copolymer (Hycar CTB containing 8 mol % of acrylnitrile produced by Ube Kosan, Inc.).

SA: Succinic anhydride
PA: Phthalic anhydride
MA: Maleic anhydride
HA: Cyclohexane dicarboxylic anhydride
TA: Cyclohexane dicarboxylic anhydride
PO: Propylene oxide
EO: Ethylene oxide

Test No.2 (End modified PD-PES block copolymers)

End modified PD-PES block copolymers were obtained from B' of Table 1a (except for K in Table 2a which was obtained from F' in Table 1a).

TABLE 2a

| Kind | Modifying Agent | Structure of End Group |
|---|---|---|
| J | Succinic anhydride | -COOH |
| K | Same as above | -COOH |
| L | Glycidyl Methacrylate | 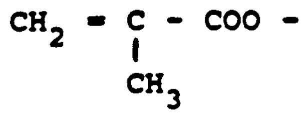 |
| M | Toluilene di-isocyanate | * 7 |
| N | Epichlorohydrine | 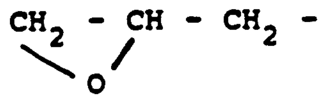 |
| O | Methylchloride | 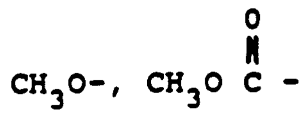 |
| P | $Ca(OH)_2$ | Calcium carboxylate |

Note:

*7: 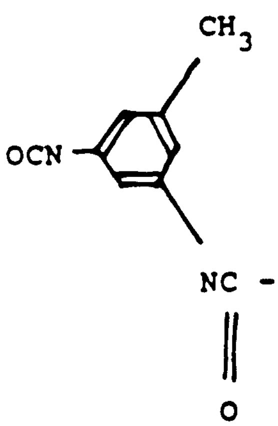

Evaluation No. 1

Placed in a beaker were 60 weight parts of a styrene solution of unsaturated polyester resin containing 60% of solid component (polyset 9107 produced by Hitachi Kasei, Inc.: phthalic ester type), 27 weight parts of styrene monomer and 13 weight parts of an additive listed in Table 3a. After the mixture was made uniform and stirred by a propeller stirrer for 5 minutes, it was removed into a 100mℓ measuring cylinder and its phase separation (volume %) was measured over a period of time while left standing at room temperature. The results are show in Table 3.

TABLE 3a

| Additive | Condition Immediately After Resting Quietly | After 20 Minutes | After One Hours | After Six Hours | After 24 Hours |
|---|---|---|---|---|---|
| A | White turbid dispersion | 0 | 0.5 | 3 | 10 |
| B | White turbid dispersion with small particles | 0 | 0 | 1 | 3 |
| C | Nearly soluble minute dispersion | 0 | 0 | 0 | 0 |
| D | Soluble Condition | 0 | 0 | 0 | 0 |
| E | Dissolved | 0 | 0 | 0 | 0 |
| PBG | Separation into two layers | 12 | 12 | 13 | 13 |
| SBS | White turbid dispersion · partial separation | 5 | 12 | 13 | 14 |
| SES | White turbid dispersion | 2 | 10 | 12 | 13 |

**Notes:**

A - E: as in Table 1

PBG: α,ω-poly-1,2-butadiene glycol (Nisso PB-G1000 produced by Nippon Soda, Inc.

SBS: Styrene-butadiene-styrene block copolymer (Califlex TR1102 produced by Shell Chemicals, Inc.)

SES: Styrene-type block copolymer obtained by suspension polymerization of end modified polyester with styrene monomer (Example No. 1 of Japanese Patent Publication Tokkai 60-99158).

Evaluation No. 2

Placed inside a Banbury mixer were 40 weight parts of 33% styrene solution of J in Table 2a, 60 weights parts of unsaturated polyester resin (Yupika 7507 produced by Nippon Yupika, Inc.), 1.5 weight parts of tertiary butyl perbenzoate and 3.0 weight parts of zinc stearate. To this was added 200 weight parts of calcium carbonate powder and after the mixture became homogeneous, 60 weight parts of glass fibres with fibre length 1/2 inch were added. One minute later, the mixer was stopped and the premix obtained was moulded at 145 ° C. Surface lustre was observed on the moulded sheet. Its shrinkage by moulding was 0.005%.

When the premix using PBG of Table 3a was substituted for J, the surface lustre of moulded sheet was extremely irregular.

Evaluation No. 3

Mixed together were 40 weight parts of 33% styrene solution of the additives listed in Table 4a, 60 weight parts of unsaturated polyester resin (Polyset 9120 produced by Hitachi Kasei, Inc.), 3 weight parts of zinc stearate, 1.5 weight parts of tertiary butyl perbenzoate, 140 weight parts of calcium carbonate powder and 0.3 weight parts of parabenzoquinone. To this were added 2 weight parts of magnesium oxide and a composition containing 10% of glass fibres of length 1 inch was produced immediately. This was moulded into a mould and heated for moulding at mould temperature of 140 ° C to obtain an SMC. Its surface lustre was examined visually and its shrinkage rate was obtained. The results are shown in Table 4a.

TABLE 4a

| Additive | Surface Lustre | Shrinkage Rate Upon Moulding (%) |
|---|---|---|
| A | b | -0.10 |
| B | a-b | -0.07 |
| C | a | -0.02 |
| D | a | 0.06 |
| E | a | 0.12 |
| PBG | c | -0.20 |
| PBA | c | -0.18 |
| SES | b | 0.25 |

Notes:

A - E, PBG, SES: As explained above.

PBA: α,ω-poly-1,2-butadiene dicarboxylic acid (Nisso PB-C1000 produced by Nippon Soda, Inc.

Evaluation: (a) = Good lustre

(b) = Not very good lustre

(c) = No lustre

Evaluation No. 4

Polybutylene terephthalate resin (relative viscosity of 0.5% orthochlorophenol solution at 25°C: 1.70) and additive of Table 5a were mixed at weight ratio of 90/10 and pellets were produced by melting and kneading by means of an extruder having a vent with diameter of 30mm. After the pellets obtained were dried under vacuum, moulded products were obtained by injection moulding. Izod impact strength (with notches) was measured (ASTM-D256-56) and the dispersion of additives in the matrix resin was observed with an electron microscope. The results are show in Table 5a.

When PBA was used with reference to Table 5a, there were free rotations of the extruder screw during the pellet-forming process caused by incomplete kneading and a small amount of coagulated PBA spilled out of the vent opening.

TABLE 5a

| Additive | Izod Impact Strength | Dispersion Condition |
|---|---|---|
| A | 7.9 | Fine dispersion |
| B | 8.4 | Same as above |
| C | 8.2 | Same as above |
| D | 7.5 | Extremely fine dispersion |
| E | 6.8 | Extremely fine dispersion - completely compatible |
| PBA | 2.5 ~ 3.2 | Fine - bulk dispersion |
| SES | 2.8 | Fine dispersion |
| None | 3.0 | - |

Notes:

A - E, PBA, SES: As explained above

Range regarding PBA indicates fluctuations, depending on the position.

Evaluation No. 5

The PD-PES block copolymers listed in Table 2a were measured and observed as explained above in connection with Evaluation No. 4 and comparisons were made with N of Table 1a. The results are showin in Table 6a. The added amount of additives was 12.5%.

TABLE 6a

| Additive | Izod Impact Strength | Dispersion Condition |
|---|---|---|
| B | 8.4 | Fine dispersion |
| N | 9.0 | Same as above |
| O | 8.6 | Same as above |

As will be appreciated from the above Examples, the additives of the present invention include [polydiene]/[polyester] block copolymers which have the characteristics of both polydiene compounds and the polyester polymers and with affinity to both. They provide superior moulding workability, and products with superior surface quality, improved mechanical strength and reduced shrinkage may can be obtained.

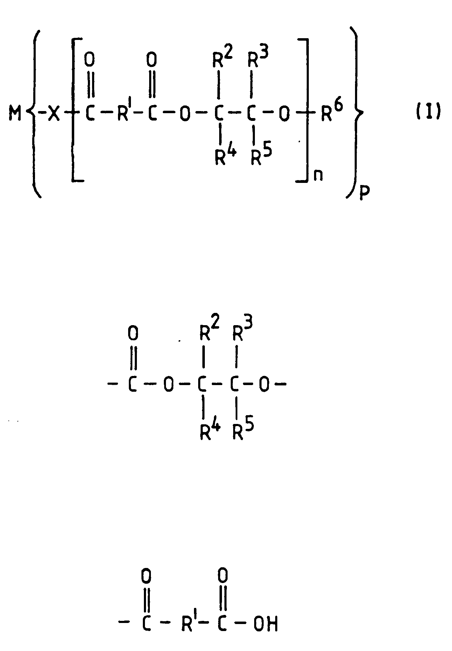

## Claims

**1.** A block copolymer which has the formula (I)

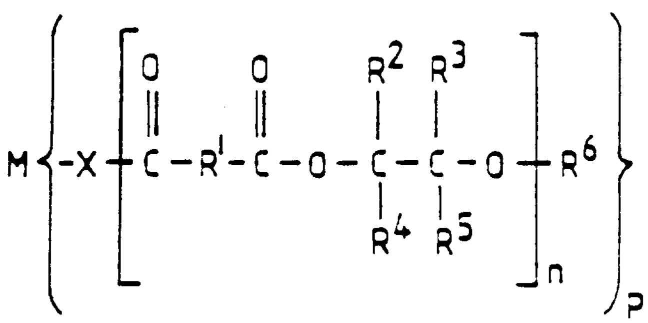

(I)

wherein M is a polydiene block or hydrogenated polydiene block;

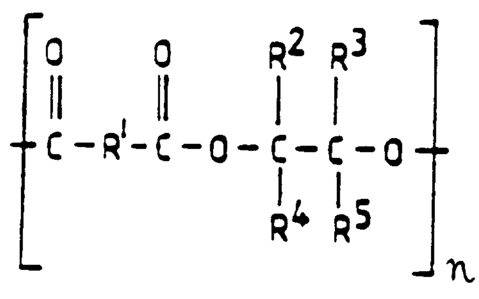

is a polyester block which is derived from the reaction between a dicarboxylic anhydride and epoxide, wherein $R^1$-$R^5$ are as defined below;

X is 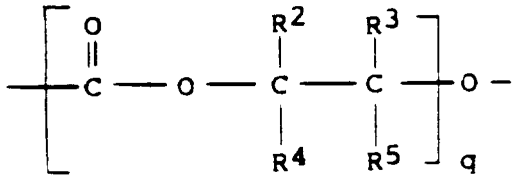

wherein q is zero when the polydiene or hydrogenated polydiene from which M is derived had within its molecule a hydroxyl group, and q is 1 when the polydiene or hydrogenated polydiene from which M is derived had a carboxyl group, and $R^2$-$R^5$ are as defined below;
$R^1$ is ethylene, ethenylene, 1,2-phenylene, 1,2-cyclohexylene, or cyclohexenylene and is the same or different in each repeat unit;
$R^2$-$R^5$ are the same or different and are hydrogen or $C_{1-2}$ alkyl and are the same or different in each repeat unit;
n and p are positive integers;
$R^6$ is hydrogen or

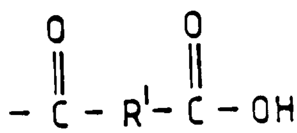

wherein $R^1$ is as defined;
and functional derivatives thereof, the weight ratio of the polydiene block to the total block copolymer being in the range of 95-5 weight %.

**2.** A block copolymer according to claim 1 wherein the polydiene is a homopolymer of polybutadiene or hydrogenated polybutadiene.

**3.** A block copolymer according to claim 1 wherein the polydiene is a homopolymer of polyisoprene or hydrogenated polyisoprene.

**4.** A block copolymer according to any of claims 1 to 3 wherein the free ends of the polyester blocks are modified by reaction with compounds having reactive groups selected from a vinyl, epoxy, isocyanate and carboxylic acid.

**5.** A block copolymer according to any of claims 1 to 3 wherein the ends of the polyester blocks are modified by formation of an ester or ether.

**6.** A block copolymer according to any of the claims 1 to 3 wherein the free end carboxyl groups are converted to their alkali or alkine earth metal salts.

**7.** A block copolymer according to any of claims 1 to 4 wherein more than 25% the free ends of the polyester blocks are carboxylic acid group.

**8.** An additive for synthetic resins comprising a block copolymer according to any of claims 1 to 7

**9.** An additive according to claim 8 wherein the weight ratio of said polydiene: said polyester blocks is between 10% and 95%.

**10.** An additive according to claim 8 wherein the said ratio is between 40% and 90%.

**11.** A method of producing block copolymer according to claim 1, comprising reacting a polydiene having one or more hydroxyl groups or carboxylic acid groups within its molecule with at least one organic dicarboxylic anhydride and one or more species of 1,2-epoxide in the presence of catalyst.

**12.** A method according to claim 11 wherein the said catalyst is lithium halide or a tetra- $C_{1-4}$ alkyl ammoniun salt.

**Patentansprüche**

**1.** Blockcopolymer der Formel (I)

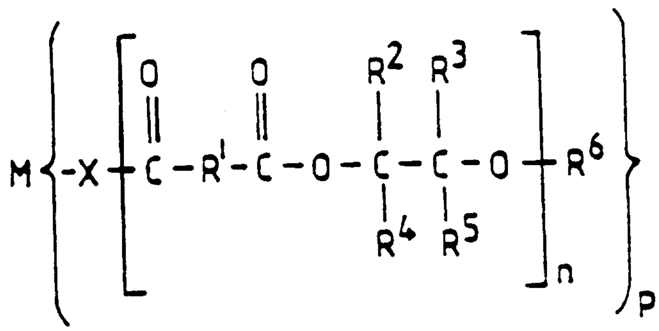

(I)

worin M ein Polydienblock oder ein Block aus hydriertem Polydien ist;

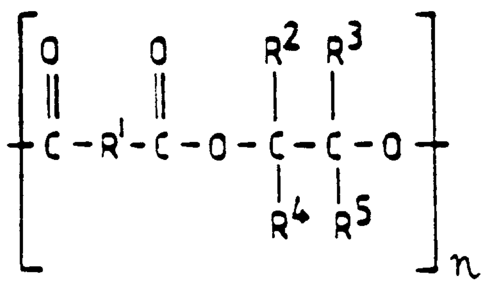

ein Polyesterblock ist, der sich aus der Reaktion zwischen einem Dicarbonsäureanhydrid und Epoxid ableitet, worin $R^1$ - $R^5$ die unten angegebenen Bedeutungen besitzen;

X

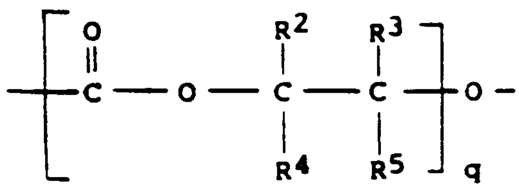

ist, worin q Null ist, wenn das Polydien oder das hydrierte Polydien, von dem M abgeleitet ist, in seinem Molekül eine Hydroxylgruppe hatte, und q 1 ist, wenn das Polydien oder das hydrierte Polydien, von dem M abgeleitet ist, eine Caboxylgruppe hatte, und $R^2$ - $R^5$ die unten angegebenen Bedeutungen besitzen;

$R^1$ Ethylen, Ethenylen, 1,2-Phenylen, 1,2-Cyclohexylen oder Cyclohexenylen ist und in jeder wiederholten Einheit gleich oder verschieden ist;

$R^2$ - $R^5$, die gleich oder verschieden sind, Wasserstoff oder $C_{1-2}$-Alkyl bedeuten und in jeder wiederholten Einheit gleich oder verschieden sind;

n und p positive ganze Zahlen sind;

$R^6$ Wasserstoff oder

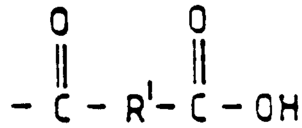

bedeutet, worin $R^1$ die genannte Bedeutung besitzt;
sowie deren funktionelle Derivate wobei das Gewichtsverhältnis zwischen dem Polydienblock und dem Gesamt-Blockcopolymer im Bereich zwischen 95 und 5 Gew.-% liegt.

**2.** Blockcopolymer nach Anspruch 1, worin das Polydien ein Homopolymer aus Polybutadien oder hydriertem Polybutadien ist.

**3.** Blockcopolymer nach Anspruch 1, worin das Polydien ein Homopolymer aus Polyisopren oder hydriertem Polyisopren ist.

**4.** Blockcopolymer nach einem der Ansprüche 1 bis 3, worin die freien Enden der Polyesterblöcke durch Umsetzung mit Verbindungen modifiziert sind, die aus Vinyl, Epoxy, Isocyanat und Carbonsäure ausgewählte reaktive Gruppen tragen.

**5.** Blockcopolymer nach einem der Ansprüche 1 bis 3, worin die Enden der Polyesterblöcke durch Bildung eines Esters oder Äthers modifiziert sind.

**6.** Blockcopolymer nach einem der Ansprüche 1 bis 3, worin die Carboxylgruppen an den freien Enden in ihre Alkali- oder Erdalkalisalze umgewandelt sind.

**7.** Blockcopolymer nach einem der Ansprüche 1 bis 4, worin mehr als 25 % der freien Enden der Polyesterblöcke Carbonsäuregruppen sind.

**8.** Zusatz für Kunstharze, umfassend ein Blockcopolymer gemäß einem der Ansprüche 1 bis 7.

**9.** Zusatz nach Anspruch 8, worin das Gewichtsverhältnis zwischen dem Polydien und den Polyesterblökken zwischen 10 % und 95 % beträgt.

**10.** Zusatz nach Anspruch 9, worin das Verhältnis zwischen 40 % und 90 % liegt.

**11.** Verfahren zur Herstellung des Blockcopolymers gemäß Anspruch 1, bei dem ein Polydien mit einer oder mehreren Hydroxylgruppen oder Carbonsäuregruppen in seinem Molekül in Gegenwart eines Katalysators umgesetzt wird mit mindestens einem organischen Dicarbonsäureanhydrid und einem oder mehreren Vertretern von 1,2-Epoxiden.

**12.** Verfahren nach Anspruch 11, Worin der Katalysator Lithiumhalogenid oder ein Tetra-$C_{1-4}$-alkylammoniumsalz ist.

## Revendications

**1.** Copolymère segmenté qui a la formule (I)

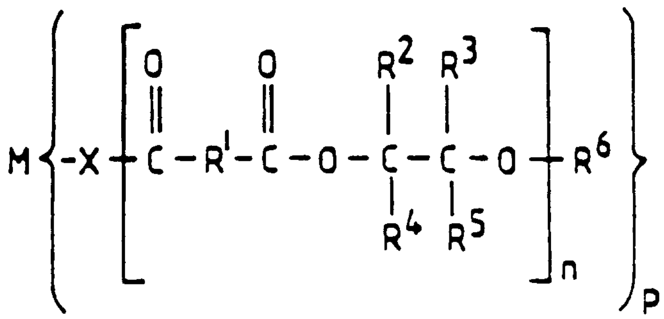

(I)

dans laquelle M est un segment polydiène ou un segment polydiène hydrogéné;

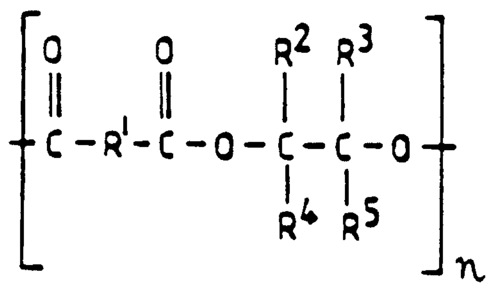

est un segment polyester qui est dérivé de la réaction entre un anhydride dicarboxylique et un époxyde, dans lequel $R^1$-$R^5$ sont tels qu'ils sont définis ci-après:

X est 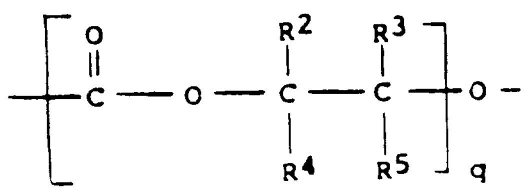

où q est zéro lorsque le polydiène ou le polydiène hydrogéné dont M est dérivé a, dans sa molécule, un groupe hydroxyle et q est 1 lorsque le polydiène ou le polydiène hydrogéné dont M est dérivé a un groupe carboxylique et, $R^2$-$R^5$ sont tels qu'ils sont définis ci-après;
$R^1$ est de l'éthylène, de l'éthénylène, du 1,2-phénylène, du 1,2-cyclohexylène ou du cyclohexénylène et est identique ou différent dans chaque unité répétitive;
$R^2$-$R^5$ sont identiques ou différents et sont de l'hydrogène ou un alkyle en $C_1$-$C_2$ et sont identiques et différents dans chaque unité répétitive;
n et p sont des nombres entiers positifs
$R^6$ est de l'hydrogène ou

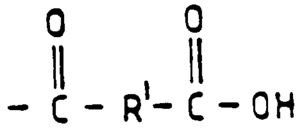

où $R^1$ est tel qu'il est défini plus haut;
et ses dérivés fonctionnels, le rapport pondéral du segment polydiène sur le copolymère segmenté total étant dans la plage de 95-5% en poids.

**2.** Copolymère segmenté selon la revendication 1, dans lequel le polydiène est un homopolymère de polybutadiène ou de polybutadiène hydrogéné.

**3.** Copolymère segmenté selon la revendication 1, dans lequel le polydiène est un homopolymère de polyisoprène ou de polyisoprène hydrogéné.

**4.** Copolymère segmenté selon l'une quelconque des revendications 1 à 3, dans lequel les extrémités libres des segments polyesters sont modifiés par réaction avec des composés ayant des groupes réactionnels choisis parmi les groupes vinyle, époxy, isocyanate et acide carboxylique.

**5.** Copolymère segmenté selon l'une quelconque des revendications 1 à 3, dans lequel les extrémités des segments polyesters sont modifiés par formation d'un ester ou d'un éther-oxyde.

**6.** Copolymère segmenté selon l'une quelconque des revendications 1 à 3, dans lequel les groupes carboxyliques des extrémités libres sont transformés en leurs sels de métal alcalin ou alcalinoterreux.

**7.** Copolymère segmenté selon l'une quelconque des revendications 1 à 4, dans lequel plus de 25% des extrémités libres des segments polyesters sont des groupes acides carboxyliques.

**8.** Additif pour résines de synthèse comprenant un copolymère segmenté selon l'une quelconque des revendications 1 à 7.

**9.** Additif selon la revendication 8, dans lequel le rapport pondéral dudit polydiène sur lesdits segments polyesters est entre 10% et 95%.

**10.** Additif selon la revendication 8, dans lequel ledit rapport est entre 40% et 90%.

**11.** Procédé de production d'un polymère segmenté selon la revendication 1, comprenant la réaction entre un polydiène dont la molécule a un ou plusieurs groupes hydroxyles ou acides carboxyliques et au moins un anhydride organique dicarboxylique et une ou plusieurs espèces de 1,2-époxyde en présence d'un catalyseur.

**12.** Procédé selon la revendication 11, dans lequel ledit catalyseur est un halogénure de lithium ou un sel de tétra-alkyl(en $C_1$-$C_4$) ammonium.

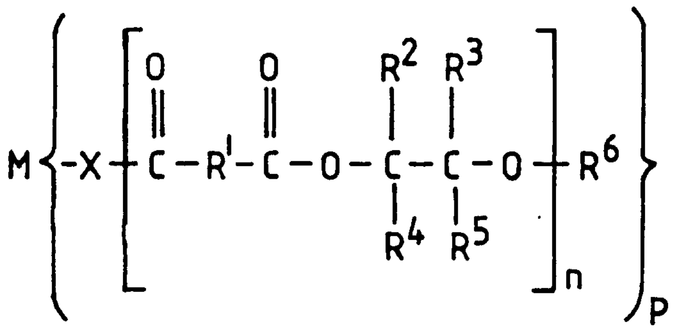 (I)